# EUROPÄISCHE PATENTSCHRIFT

(11) **EP 2 048 013 B1**
(45) Veröffentlichungstag und Bekanntmachung des Hinweises auf die Patenterteilung: **13.10.2010**
(21) Anmeldenummer: 09001366.5
(22) Anmeldetag: 07.08.2007
(51) Int. Cl.: B60J 7/14

(54) **Öffnungsfähiges Dach für ein Cabriolet**
Openable roof for a convertible
Toit ouvrant pour un cabriolet

(30) Priorität: 08.09.2006 DE 102006042293
(43) Veröffentlichungstag der Anmeldung: 15.04.2009
(62) Teilanmeldung aus: 07015433.1
(73) Patentinhaber: Dr. Ing. h.c. F. Porsche AG, 70435 Stuttgart (DE)
(72) Erfinder: Beierl, Dominik, 70825 Korntal-Münchingen (DE); Biersack, Harald, Dr., 70174 Stuttgart (DE)

(56) Entgegenhaltungen:
- EP-A- 1 810 858
- DE-A1- 3 416 286
- DE-A1- 10 147 016

## Beschreibung

Die vorliegende Erfindung betrifft ein Verdeck für ein Cabriolet, gemäß Oberbegriff des Anspruchs 1.

Ein derartiges Verdeck für ein Cabriolet ist aus der DE 101 47 016 A1 bekannt. Es besitzt einen hinteren Heckscheibenrahmen, dem im geschlossenen Zustand des Verdecks zumindest ein davor gelegener Dachabschnitt zugeordnet ist. Dachabschnitt und Heckscheibenrahmen sind als Modulträger ausgebildet, an dem unterschiedliche Dachmodule anbringbar sind. So kann beispielsweise der Dachabschnitt vollständig mit Verdeckstoff bezogen sein, während der Heckscheibenrahmen als starres hinteres Dachteil mit Heckscheibe ausgebildet ist.

Aus der DE 34 16 286 A1 ist ein Verdeck bekannt, das mit Verdeckstoff bezogene Dachabschnitte aufweist, während ein Heckscheibenteil nicht von dem Verdeckstoff bedeckt ist.

Cabriolets weisen üblicherweise öffnungsfähige Dächer, im allgemeinen so genannte Hardtops oder Softtop-Verdecke auf. Insbesondere die als Softtops ausgebildeten Verdecke fallen dabei jedoch durch eine hohe Lärmkulisse innerhalb eines Innenraums des Cabriolets unangenehm auf.

Aus der DE 102 05 935 B4 ist eine Fahrzeugdachstruktur bekannt, die an einem Cabriolet bewegbar gelagert und zwischen einer Schließstellung über dem Fahrgastraum und einer Offenstellung im Dachablageraum des Fahrzeugs verstellbar ist. Die Fahrzeugdachstruktur weist dabei einen Vorder-, einen Mittel- und einen Hinterabschnitt auf, wobei der Vorder- und der Hinterabschnitt als feste Dachteile ausgebildet sind und die Fahrzeugdachstruktur durch Ergänzung eines festschaligen mittleren Dachteils als Mittelabschnitt ein Hardtopdach oder durch Ergänzung eines zumindest den Mittelabschnitt überdeckenden flexiblen Dachteils ein Faltverdeck bildet. Um die unterschiedlichen Dachvarianten realisieren zu können, sind das mittlere, feste Dachteil bzw. das flexible Dachteil für den Mittelabschnitt als Austauschteile an der Fahrzeugdachstruktur lösbar befestigt.

Die vorliegende Erfindung beschäftigt sich mit dem Problem, für ein Verdeck der gattungsgemäßen Art eine weitere Ausführungsform anzugeben, bei welcher insbesondere der Fahrkomfort des Cabriolets erhöht ist.

Erfindungsgemäß wird dieses Problem durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, ein Verdeck eines Cabriolets in einer Modulbauweise auszubilden, wobei ein stets gleiches Verdeckgestänge und stets gleiche Modulträgerabschnitte zum Einsatz gelangen, welche mit, je nach gewünschter Dachvariante, unterschiedlichen flächigen Dachmodulen belegbar sind. Das Verdeck ist dabei in einem rückwärtigen Bereich des Cabriolets in üblicher Weise ablegbar und weist einen rückwärtigen Heckscheibenrahmen sowie im geschlossenem Zustand zumindest einen in Fahrtrichtung davor gelegenen Dachabschnitt auf. Die Dachabschnitte bzw. der Heckscheibenrahmen sind dabei jeweils als rahmenartiger Modulträger ausgebildet und können zur Realisierung unterschiedlicher Dachvarianten mit unterschiedlichen, flächigen Dachmodulen bestückt werden. Durch die Modulbauweise lassen sich mit einer hohen Anzahl an Gleichteilen, nämlich dem Verdeckgestänge, dem Heckscheibenrahmen und den Dachabschnitten, unterschiedlichste Dachvarianten realisieren, indem hierzu unterschiedliche Dachmodule an den oben genannten Dachkomponenten angeordnet werden. So kann beispielsweise nicht transparentes Dach lediglich durch den Einbau nicht transparenter Dachmodule realisiert werden, wodurch ein kostengünstiges Baukastensystem erreicht wird, welches jedoch einen hohen Flexibilitätsgrad bei der Fertigung erlaubt. Erfindungsgemäß überzieht ein flexibler Überzug bei geschlossenem Verdeck das Verdeckgestänge und den Heckscheibenrahmen in einem die Heckscheibe umgebenden Bereich, während an den Dachabschnitten ausschließlich nichttransparente Dachmodule angebracht sind.

Bei einer weiteren Ausführungsform des Verdecks ist zweckmäßig ein flexibler Überzug vorgesehen, der bei geschlossenem Verdeck sämtliche Dachabschnitte und den Heckscheibenrahmen in einem die Heckscheibe umgebenden Bereich, überzieht. Hierdurch kann eine, einem Softtop ähnliche Dachvariante geschaffen werden, wobei der vorzugsweise wasserabweisende Überzug äußere Witterungseinflüsse abschirmt. Hierdurch lassen sich die Vorteile eines so genannten Hardtops, nämlich eine deutlich verbesserte Geräuschkulisse im Innenraum des Cabriolets, mit dem erfindungsgemäßen Verdeck erreichen, welches von seiner Konstruktion dem eines verstärkten Softtops entspricht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

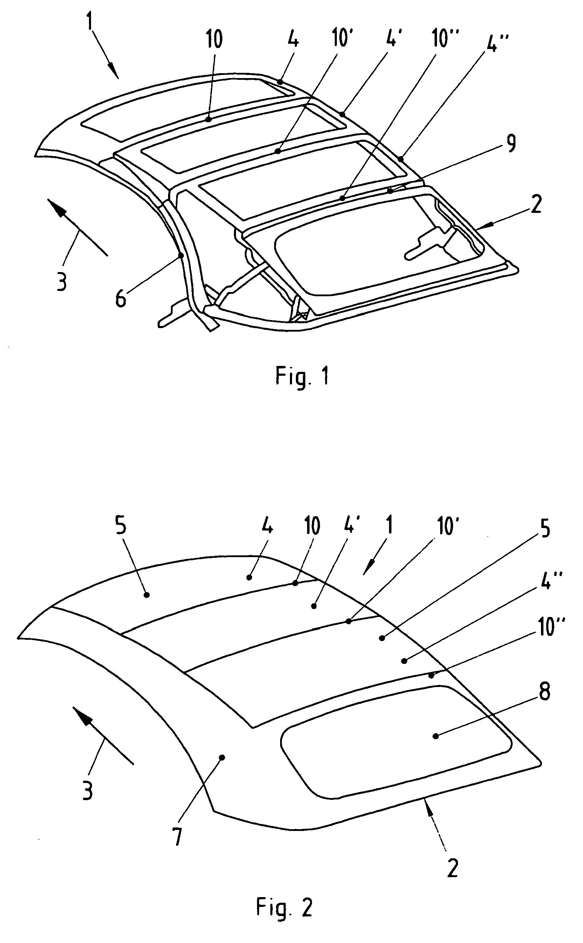

Ein von der Erfindung gemäß Patentanspruch 1 umfasstes Ausführungsbeispiel ist in Fig. 2 dargestellt und wird in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Ansicht auf rahmenartige Modulträger eines Verdecks eines Cabriolets, (Fortsetzung auf der ursprünglichen Beschreibungsseite 4)
- Fig. 2: eine Darstellung wie in Fig. 1, jedoch mit angebrachten Dachmodulen und einem angebrachten Überzug,
- Fig. 3: eine Darstellung wie in Fig. 2, jedoch mit anderen Dachmodulen.

Entsprechend Fig. 1 ist ein zu öffnendes Verdeck 1 eines im übrigen nicht gezeigten Cabriolets dargestellt, welches in einem rückwärtigen Bereich des Cabriolets, insbesondere einen Verdeckkasten, ablegbar ist. Das Verdeck 1 weist einen rückwärtigen Heckscheibenrahmen 2 und in geschlossenem Zustand zumindest einen in Fahrtrichtung 3 davor gelegenen Dachabschnitt 4, 4', 4" auf. In geöffnetem Zustand, liegen der Dachabschnitt 4 und 4' oberhalb des Heckscheibenrahmens 2, während der Dachabschnitt 4" bei abgelegtem Verdeck 1 unterhalb des Heckscheibenrahmens 2 angeordnet ist.

Gemäß der Fig. 1 weist das Verdeck 1 insgesamt oben beschriebene drei Dachabschnitte 4, 4', 4" und den Heckscheibenrahmen 2 auf, wobei der in Fahrtrichtung 3 vorderste Dachabschnitt 4 als Integraldachrahmen und der direkt dahinter gelegene Dachabschnitt 4' als erster Flächenspriegel ausgebildet sind. Der zwischen dem ersten Flächenspriegel 4' und dem Heckscheibenrahmen 2 angeordnete Dachabschnitt 4" ist als zweiter Flächenspriegel ausgebildet.

Zur Realisierung unterschiedlicher Dachvarianten ist nunmehr vorgesehen, dass zumindest ein Dachabschnitt 4, 4', 4" und/oder der Heckscheibenrahmen 2 jeweils als rahmenartiger Modulträger ausgebildet sind/ist, an dem unterschiedliche, flächige Dachmodule 5 anbringbar sind (vgl. Fig. 2).

Die Dachmodule 5 können dabei beispielsweise ganz oder zumindest teilweise transparent ausgebildet sein, wobei auch eine Ausbildung aus klarem oder getöntem Sicherheitsverbundglas denkbar ist. Mit derartigen Dachmodulen 5 lässt sich beispielsweise ein Panaromadach erzeugen. Darüber hinaus ist vorstellbar, dass zumindest ein Dachmodul 5 aus Leichtmetall oder aus Kunststoff, d.h. nicht transparent, ausgebildet ist und zusätzlich beispielsweise in der Wagenfarbe des nicht gezeigten Cabriolets gehalten ist. Dabei können die unterschiedlichen Dachmodule 5 in beliebiger Weise in die zugehörigen Dachabschnitte 4, 4', 4" bzw. in den zugehörigen Heckscheibenrahmen 2 eingesetzt bzw. daran angebracht werden.

Generell sind die als Modulträger ausgebildete Dachabschnitte 4, 4', 4" und der Heckscheibenrahmen 2 zumindest bei geschlossenem Verdeck 1 zwischen einem seitlichen Verdeckgestänge 6 angeordnet, welches einen seitlichen Dachrahmen bildet. Zumindest dieses Verdeckgestänge 6 ist dabei bei allen Varianten von einem flexiblen, von üblichen Softpops her bekannten, Überzug 7 überzogen, der durch seine wasserabweisende Wirkung äußere Witterungseinflüsse von einem Innenraum des Cabriolets abschirmt. Generell kann dabei vorgesehen sein, dass der flexible Überzug 7 entweder bei geschlossenem Verdeck 1 sämtliche Dachabschnitte 4, 4', 4" sowie den Heckscheibenrahmen 2 in einem eine Heckscheibe 8 umgebenden Bereich überzieht oder aber dass zur Realisierung der Panoramadachvariante der Überzug 7 bei geschlossenem Verdeck 1 ausschließlich das Verdeckgestänge 6 überzieht, während an den Dachabschnitten 4, 4', 4" und am Heckscheibenrahmen 2 transparente Dachmodule 5 angebracht sind.

Fig. 2 zeigt eine Dachvariante, bei welchem der flexible Überzug 7 das seitliche Verdeckgestänge 6 überzieht, ebenso wie den Heckscheibenrahmen 2 in dem die Heckscheibe 8 umgebenden Bereich. In den Dachabschnitten 4, 4', 4" sind zwischen dem seitlichen Überzug 7 die einzelnen Dachmodule 5 angeordnet, welche beispielsweise aus Leichtmetall und/oder aus Kunststoff ausgebildet sein können und insbesondere die selbe Lackierung aufweisen, wie das Cabriolet. Denkbar ist aber auch, dass zumindest eines der Dachmodule 5 gemäß der Fig. 2 als transparentes Dachmodul 5 ausgebildet ist.

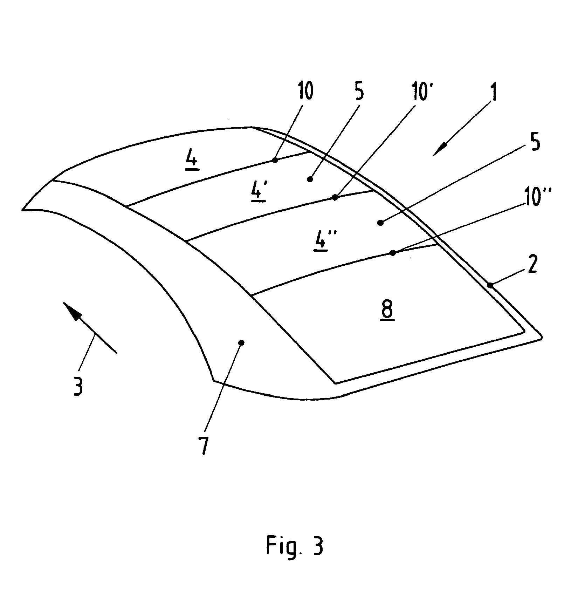

In Fig. 3 ist die Panaromadachvariante realisiert, bei welcher, wie oben erwähnt, der Überzug 7 bei geschlossenem Verdeck 1 ausschließlich das Verdeckgestänge 6 überzieht, während an den Dachabschnitten 4, 4', 4" und am Heckscheibenrahmen 2 transparente Dachmodule 5 angeordnet sind. Bei dieser Panaromadachvariante ist dabei ein im Vergleich zu einer Heckscheibe 8 größeres, transparentes Dachmodul 5 am Heckschreibenrahmen 2 angeordnet, wodurch sich das große, bereits jeweils in den vorderen Dachabschnitten 4, 4', 4" eingesetzte transparente Dachmodul 5 auch im Heckscheibenrahmen 2 wieder findet und dadurch den optischen Gesamteindruck des Panaromadachs verbessert.

Bei einem über sämtliche Dachabschnitte 4, 4', 4" und den Heckscheibenrahmen 2 gehenden Überzug 7, übernimmt dieser den Wetterschutz, wobei bei dieser Variante und bei dem als Panaromadach ausgebildeten Verdeck zwischen zwei benachbarten Dachabschnitten 4, 4' und/oder zwischen dem Heckscheibenrahmen 2 und dessen benachbarten Dachabschnitt 4" jeweils eine Dichtung 9 angeordnet sein kann, die insbesondere als Akustikdichtung ausgebildet ist und den Innenraum des Cabriolets schalltechnisch abschirmt. Eine derartige Dichtung 9 kann beispielsweise durch ein Mikrofaser-Vlies realisiert werden, welches gemäß einer speziellen Ausführungsform in einen Schlauch eingenäht sein kann. Die Dichtung 9 dichtet somit die zwischen den einzelnen Dachabschnitten 4, 4', 4" bzw. zwischen dem Dachabschnitt 4" und dem Heckscheibenrahmen 2 gelegenen Fugen 10, 10", 10" zumindest schalltechnisch ab.

## Patentansprüche

1. Verdeck (1) für ein Cabriolet, das in einem rückwärtigen Bereich des Cabriolets ablegbar ist und das einen rückwärtigen Heckscheibenrahmen (2) und in geschlossenem Zustand zumindest einen in Fahrtrichtung (3) davor gelegenen Dachabschnitt (4, 4', 4") aufweist, wobei zumindest ein Dachabschnitt (4, 4', 4") und/oder der Heckscheibenrahmen (2) jeweils als rahmenartiger Modulträger ausgebildet sind/ist, an dem zur Realisierung unterschiedlicher Dachvarianten unterschiedliche, flächige Dachmodule (5) anbringbar sind, wobei zumindest teilweise ein flexibler Überzug (7) vorgesehen ist, **dadurch gekennzeichnet, dass** der Überzug (7) bei geschlossenem Verdeck (1) das Verdeckgestänge (6) und den Heckscheibenrahmen (2) in einem die Heckscheibe (8) umgebenden Bereich überzieht, während an den Dachabschnitten (4, 4', 4") ausschließlich nicht transparente Dachmodule (5) angebracht sind.

2. Verdeck nach Anspruch 1, **dadurch gekennzeichnet, dass** das Verdeck (1) insgesamt drei Dachabschnitte (4, 4', 4") und den Heckscheibenrahmen (2) aufweist, wobei der in Fahrtrichtung vorderste Dachabschnitt (4) als Integraldachrahmen und die dahinter gelegenen Dachabschnitte (4', 4") als erster und zweiter Flächenspriegel ausgebildet sind.

3. Verdeck nach Anspruch 1 oder 2, **dadurch gekennzeichnet,**
- **dass** zumindest ein Dachmodul (5) aus Leichtmetall oder aus Kunststoff ausgebildet ist, und/oder
- **dass** zumindest ein Dachmodul (5) in der Wagenfarbe gehalten ist.

4. Verdeck nach Anspruch 1, **dadurch gekennzeichnet, dass** der Überzug (7) bei geschlossenem Verdeck (1) sämtliche Dachabschnitte (4, 4', 4") und den Heckscheibenrahmen (2) in einem die Heckscheibe (8) umgebenden Bereich überzieht.

5. Verdeck nach einem der Ansprüche 1 bis 4, **dadurch gekennzeichnet,**
- **dass** zwischen zwei benachbarten Dachabschnitten (4, 4', 4") und/oder zwischen dem Heckscheibenrahmen (2) und dessen benachbartem Dachabschnitt (4") jeweils eine Dichtung (9) angeordnet ist, und/oder
- **dass** die Dichtung (9) als Akustikdichtung ausgebildet ist.

6. Verdeck nach Anspruch 1, **dadurch gekennzeichnet, dass** das Verdeckgestänge (6) bei geschlossenem Verdeck (1) seitliche Dachrahmen bildet, zwischen welchen der wenigstens eine Dachabschnitt (4, 4', 4") und der Heckscheibenrahmen (2) angeordnet sind.

## Claims

1. Top (1) for a convertible, which can be put away in a rear region of the convertible and which has a rear window frame (2) and, in the closed state, at least one roof section (4, 4', 4") situated in front thereof in the direction of travel (3), at least one roof section (4, 4', 4") and/or the rear window frame (2) each being designed as frame-like module carriers to which different sheet-like roof modules (5) can be fitted in order to realize different roof variants, a flexible covering (7) being at least partially provided, **characterized in that**, when the top (1) is closed, the covering (7) covers the top linkage (6) and the rear window frame (2) in a region surrounding the rear window (8) while only non-transparent roof modules (5) are fitted to the roof sections (4, 4', 4").

2. Top according to Claim 1, **characterized in that** the top (1) has a total of three roof sections (4, 4', 4") and the rear window frame (2), the frontmost roof section (4) in the direction of travel being designed as an integral roof frame and the roof sections (4', 4") situated behind it being designed as first and second surface bows.

3. Top according to Claim 1 or 2, **characterized**
- **in that** at least one roof module (5) is formed from light metal or from plastic, and/or
- **in that** at least one roof module (5) is kept in the color of the vehicle.

4. Top according to Claim 1, **characterized in that**, when the top (1) is closed, the covering (7) covers all of the roof sections (4, 4', 4") and the rear window frame (2) in a region surrounding the rear window (8).

5. Top according to one of Claims 1 to 4, **characterized**
- **in that** a respective seal (9) is arranged between two adjacent roof sections (4, 4', 4") and/or between the rear window frame (2) and its adjacent roof section (4"), and/or
- **in that** the seal (9) is designed as an acoustic seal.

6. Top according to Claim 1, **characterized in that**, when the top (1) is closed, the top linkage (6) forms lateral roof frames between which the at least one roof section (4, 4', 4") and the rear window frame (2) are arranged.

## Revendications

1. Capote (1) pour un cabriolet, qui peut être déposée dans une région arrière du cabriolet, et qui présente un cadre arrière de vitre arrière (2) et dans l'état fermé, au moins une portion de toit (4, 4', 4") placée avant celui-ci dans la direction de conduite (3), au moins une portion de toit (4, 4', 4") et/ou le cadre de vitre arrière (2) étant réalisés à chaque fois sous forme de support modulaire en forme de cadre, sur lequel peuvent être montés différents modules de toit plats (5), pour réaliser des variantes de toit différentes, un revêtement flexible (7) étant prévu au moins en partie, **caractérisée en ce que** le revêtement (7), lorsque la capote (1) est fermée, recouvre la tringlerie de capote (6) et le cadre de vitre arrière (2) dans une région entourant la vitre arrière (8), tandis que des modules de toit (5) exclusivement non transparents sont montés sur les portions de toit (4, 4', 4").

2. Capote selon la revendication 1, **caractérisée en ce que** la capote (1) présente dans l'ensemble trois portions de toit (4, 4', 4") et le cadre de vitre arrière (2), la portion de toit (4) la plus en avant dans la direction de conduite étant réalisée sous forme de cadre de toit intégral et les portions de toit (4', 4") disposées derrière étant réalisées sous forme de premier et de deuxième arceaux plats.

3. Capote selon la revendication 1 ou 2, **caractérisée en ce**
- **qu'**au moins un module de toit (5) est réalisé en métal léger ou en plastique, et/ou
- en ce qu'au moins un module de toit (5) est dans la couleur de la voiture.

4. Capote selon la revendication 1, **caractérisée en ce que** le revêtement (7), lorsque la capote (1) est fermée, recouvre toutes les portions de toit (4, 4', 4") et le cadre de vitre arrière (2) dans une région entourant la vitre arrière (8).

5. Capote selon l'une quelconque des revendications 1 à 4, **caractérisée en ce**
- **qu'**entre deux portions de toit adjacentes (4, 4', 4") et/ou entre le cadre de vitre arrière (2) et sa portion de toit adjacente (4") est disposée à chaque fois une garniture d'étanchéité (9), et/ou
- en ce que la garniture d'étanchéité (9) est réalisée sous forme de joint d'étanchéité acoustique.

6. Capote selon la revendication 1, **caractérisée en ce que** la tringlerie de capote (6), lorsque la capote (1) est fermée, forme des cadres de toit latéraux, entre lesquels sont disposés ladite au moins une portion de toit (4, 4', 4") et le cadre de vitre arrière (2).
